# EUROPÄISCHE PATENTSCHRIFT

(11) **EP 3 357 379 B1**
(45) Veröffentlichungstag und Bekanntmachung des Hinweises auf die Patenterteilung: **27.03.2019**
(21) Anmeldenummer: 17154470.3
(22) Anmeldetag: 02.02.2017
(51) Int. Cl.: A47J 19/02

(54) **HANDBETÄTIGTE FRUCHTPRESSE**
MANUALLY OPERATED FRUIT PRESS
PRESSE-FRUITS À COMMANDE MANUELLE

(43) Veröffentlichungstag der Anmeldung: 08.08.2018
(73) Patentinhaber: keeeper GmbH, 32351 Stemwede (DE)
(72) Erfinder: DUMLER, Alex, 20359 Hamburg (DE); WITT, Florian M., 21465 Wentorf (DE); KÖNINGSBERGER, Johanna, 22765 Hamburg (DE); HECKER, Matthias, 22609 Hamburg (DE); PLATE, Torsten, 22089 Hamburg (DE); FERRIER, Andrew, Ottawa, Ontario, K2K 2N1 (CA)
(74) Vertreter: Weeg, Thomas

(56) Entgegenhaltungen:
- DE-A1- 3 414 873
- DE-A1- 10 128 693
- FR-A1- 2 805 446
- US-A- 1 542 322
- US-A- 1 959 615

## Beschreibung

Die vorliegende Erfindung bezieht sich auf eine handbetätigte Fruchtpresse mit den Merkmalen des Oberbegriffs des Anspruchs 1.

Eine gattungsgemäße Fruchtpresse ist aus der Schrift DE 101 28 693 A1 bekannt. Das Sieb ist in einer Erhebung des unteren Griffteils ausgebildet. Aus einer Frucht austretender Saft kann leicht zur Seite ablaufen. Eine Frucht, die auf der Erhebung aufliegt, kann leicht zur Seite abrutschen. Eine weitere gattungsgemäße Fruchtpresse ist der Schrift US 1,542,322 zu entnehmen. Der mehrteilige Aufbau der Fruchtpresse mit mehreren Gelenken ist aufwendig in der Herstellung und Handhabung.

Eine weitere Fruchtpresse ist aus der Schrift DE 34 14 873 A1 bekannt. Die dort offenbarte Fruchtpresse verfügt über einen gelenkig mit dem oberen Hebelarm verbundenen Pressstempel. Der untere Hebelarm ist starr mit einem Behälter verbunden, in den ein Siebeinsatz eingestellt ist. Die Fruchtpresse ist einhändig bedienbar. Der Siebeinsatz weist als einen Bestandteil einen hier als Wölbboden ausgebildeten Auflagebock auf, der seinerseits Sieböffnungen aufweist, durch die ausgepresster Fruchtsaft ablaufen kann. Wenn die beiden Hebelarme aus einer geöffneten Stellung aufeinander zu bewegt werden, wird der Pressstempel dabei in den Behälter hinein und auf den Siebeinsatz mit dem zugehörigen Auflagebock zu bewegt. Wenn zuvor ein Fruchtstück auf den Auflagebock aufgelegt worden ist, wird bei dieser Bewegung Fruchtsaft aus dem Fruchtstück ausgepresst. Die dabei freiwerdenden gröberen Fruchtbestandteile werden von den Siebstegen zurückgehalten, während der flüssige Fruchtsaft durch die Sieböffnungen in den darunter befindlichen Behälter ablaufen kann.
Die Entnahme des ausgepressten Fruchtsafts ist bei dieser Fruchtpresse insgesamt sehr umständlich. Der Siebeinsatz mit dem zugehörigen Auflagebock ist erst aus dem Behälter entnehmbar, wenn die Hebelarme so weit geöffnet wurden, dass dabei der Pressstempel aus dem Behälter bewegt worden ist. Um den Behälter entleeren zu können, muss zunächst der Siebeinsatz mit dem Auflagebock aus dem Behälter entnommen werden, da ansonsten der ausgesiebte Fruchtsaft beim Ausgießen die im Sieb zurückgehaltenen gröberen Fruchtbestandteile mit ausschwemmen würde. Beim Ausgießen ist der mit dem Behälter starr verbundene Hebelarm sehr unhandlich. Auch der bewegliche Pressstempel stört die Handhabung der Fruchtpresse. Die Handhabung ist somit insgesamt sehr umständlich.
Es ist die Aufgabe der vorliegenden Erfindung, die Fruchtpresse so zu verändern, dass sie leichter zu handhaben ist.

Die Aufgabe wird für eine gattungsgemäße Fruchtpresse durch die im kennzeichnenden Teil des Anspruchs 1 genannten Merkmale gelöst.,
Durch die direkte Verbindung des Siebes einschließlich des zugehörigen Auflagebocks mit dem ersten Hebelarm muss das Sieb nicht mehr zuerst aus dem Auffangbecher herausgenommen werden, bevor der ausgepresste Saft aus dem Auffangbecher herausgeschüttet werden kann. Das Sieb mit dem Auflagebock kann vielmehr nun mit dem ersten Hebelarm und damit mit der Fruchtpresse insgesamt verbunden bleiben, wenn ein Benutzer den ausgepressten und durch das Sieb abgesiebten Fruchtsaft verwenden will. Dazu kann der Auffangbecher nun unmittelbar leicht und ohne weitere zusätzliche Handgriffe von der Fruchtpresse abgenommen und separat von der übrigen Fruchtpresse gehalten werden. Die unhandliche übrige Fruchtpresse kann nach dem Abnehmen des Auffangbechers beiseite gelegt werden, wenn der gewonnene Fruchtsaft umgeschüttet wird. Der kompakte Auffangbecher mit dem darin angesammelten Fruchtsaft erlaubt eine viel einfachere und genauere Handhabung als die voluminöse Fruchtpresse, insbesondere beim Kochen, wenn beispielsweise nur etwas Zitronensaft benötigt wird, um den Geschmack einer Speise zu verfeinern.

Die Fruchtpresse kann nun wahlweise auch benutzt werden, ohne dass beim Pressvorgang der Auffangbecher mit der Fruchtpresse verbunden ist. Beim Zusammenpressen der Hebelarme kann der aus dem ausgepressten Fruchtstück austretende Fruchtsaft direkt aus dem Sieb in ein darunter befindliches separates Glas oder in eine Schüssel tropfen, oder die Fruchtsaft-Spritzer werden direkt auf ein mit dem Fruchtsaft zu verfeinerndes Lebensmittel getropft. Durch die Einstellung des aktuellen Pressdrucks auf den konkreten Saftbedarf kann die Tropfmenge sehr genau beobachtet und dosiert werden. Diese zusätzliche Einsatzmöglichkeit erweitert das Anwendungsspektrum der Fruchtpresse und vereinfacht die Handhabung zusätzlich.

Für die Erfindung macht es keinen erheblichen Unterschied aus, ob der Auffangbecher nur mit dem ersten Sieb und/oder dem Hebelarm verbunden ist. Wesentlich ist, dass der Auffangbecher leicht von den Bauteilen der übrigen Fruchtpresse gelöst und danach unabhängig davon gehandhabt werden kann.

Das Sieb weist mehrere Materialstege auf, zwischen denen Ablauföffnungen angeordnet sind, durch die aus einem Fruchtstück ausgepresster Fruchtsaft aus der zwischen dem Presskörper und dem Sieb befindlichen Presskammer laufen kann. Zum Sieb gehört auch ein Auflagebock, auf den ein Fruchtstück aufgelegt werden kann, bevor der Pressvorgang beginnt. Der Auflagebock kann als ein aufgewölbter Raumkörper gestaltet sein, der zumindest die untersten Sieböffnungen überragt. Zwischen dem Auflagebock und der Seitenwand der Presskammer kann ein Ringraum ausgebildet sein, der beispielsweise Schalenstücke eines ausgepressten Fruchtstücks aufzunehmen vermag. Der Auflagebock kann seinerseits Sieböffnungen aufweisen. Die Oberfläche des Auflagebocks kann glatt ausgebildet sein, oder sie weist rinnenartige Vertiefungen auf, durch die ausgepresster Fruchtsaft in die Richtung der Ablauföffnungen ablaufen kann.

Mit der Anordnung des Auffangbechers unterhalb des Siebes ist gemeint, dass der Auffangbecher in Tropfrichtung des aus dem Sieb auslaufenden Fruchtsaftes unterhalb des Siebes angeordnet ist.

Mit der lösbaren Verbindung des Auffangbechers mit dem ersten Hebelarm ist eine Verbindung gemeint, bei der der Auffangbecher hinreichend fest mit dem ersten Hebelarm verbunden ist, um sich einerseits nicht selbsttätig vom ersten Hebelarm zu lösen, wenn beim Gebrauch Fruchtsaft in ihn hineinfließt, andererseits aber auch vom ersten Hebelarm so leicht abgelöst werden kann, dass kein Fruchtsaft verschüttet wird, wenn der Auffangbecher gewollt vom ersten Hebelarm getrennt wird. Eine geeignete lösbare Verbindung könnte beispielsweise einen Bajonettverschluss-, einen Rastverschluss-, einen Hebel- oder Klemmverschlussmechanismus, einen Halteriegel und/oder ein kurzes Schraubgewinde aufweisen.

Das Sieb einschließlich des zugehörigen Auflagebocks ist in einer becherartigen Vertiefung im ersten Hebelarm ausgebildet. Die becherartige Vertiefung bildet einen Aufnahmeraum, in den das auszupressende Fruchtstück eingelegt werden kann. Die Seitenwände der becherartigen Vertiefung sind geschlossen, um eine seitliche Begrenzung für die Presskammer zu bilden, die ebenfalls in der becherartigen Vertiefung liegt. Die becherartige Vertiefung steht unter der Unterseite des ersten Hebelarms hervor. Dadurch kann der Hebelweg des zweiten Hebelarms verkürzt werden, der benötigt wird, um die beiden Griffstücke der Hebelarme mit einer Hand erfassen zu können.

Der Presskörper bildet einen integrierten Bestandteil des einstückigen Formköpers des zweiten Hebelarms. Zwar ist es auch möglich, den Presskörper auch als ein gesondertes Formteil auszubilden, das lösbar oder fest mit dem zweiten Hebelarm verbunden ist. Eine bauteilmäßige Trennung des zweiten Hebelarms vom Presskörper ist allerdings aus funktionaler Sicht nicht zwingend erforderlich. Die Presskörperform des Presskörpers kann leicht in die Form des zweiten Hebelarms integriert werden. Dies ist insbesondere dann leicht möglich, wenn der zweite Hebelarm ein aus einem Kunststoff hergestelltes Formteil ist. Das Werkzeug, mit dem der zweite Hebelarm hergestellt wird, kann dabei so ausgestaltet sein, dass darin die Negativformen enthalten sind, mit denen der Presskörper als Form als ein einstückiges integriertes Bestandteil des zweiten Hebelarms ausgebildet wird. Dadurch entfallen zusätzliche Montageschritte, der Presskörper ist unverlierbar mit dem zweiten Hebelarm verbunden, und die Reinigung und Handhabung der Fruchtpresse ist durch die geringere Teileanzahl wesentlich vereinfacht.

Der Presskörper ist als eine becherartige Vertiefung im zweiten Hebelarm ausgebildet, die über die Unterseite des zweiten Hebelarms nach unten hin hervorsteht und sich bei einer Schließbewegung der ersten und zweiten Hebelarme aufeinander zu auf den Auflagebock zu absenkt. Der Presskörper kann bei dieser Ausgestaltung beim Schließvorgang gut beobachtet werden. Wenn die den Presskörper bildende becherartige Vertiefung in ihren Maßen und in ihrer Form zur becherartigen Vertiefung korrespondiert, die den Auflagebock bildet, können die Griffenden in ihrer Endlage bei einem Pressvorgang aneinander anstoßen, so dass der Hebelweg, den die beiden Hebelarme bei einem Pressvorgang aufeinander zu machen müssen, möglichst kurz bleibt.

Nach einer Ausgestaltung der Erfindung bildet das Sieb einschließlich des zugehörigen Auflagebocks einen integrierten Bestandteil des einstückigen Formköpers des ersten Hebelarms. Zwar ist es auch möglich, das Sieb mit dem Auflagebock auch als ein gesondertes Formteil auszubilden, das lösbar oder fest mit dem ersten Hebelarm verbunden ist. Eine bauteilmäßige Trennung des ersten Hebelarms vom Sieb mit dem zugehörigen Auflagebock ist allerdings aus funktionaler Sicht nicht zwingend erforderlich. Die Siebform des Siebes kann leicht in die Form des ersten Hebelarms integriert werden. Dies ist insbesondere dann leicht möglich, wenn der erste Hebelarm ein aus einem Kunststoff hergestelltes Formteil ist. Das Werkzeug, mit dem der erste Hebelarm hergestellt wird, kann dabei so ausgestaltet sein, dass darin die Negativformen enthalten sind, mit denen das Sieb mit dem Auflagebock als Form als ein einstückiges integriertes Bestandteil des ersten Hebelarms ausgebildet wird. Dadurch entfallen zusätzliche Montageschritte, das Sieb ist unverlierbar mit dem ersten Hebelarm verbunden, und die Reinigung und Handhabung der Fruchtpresse ist durch die geringere Teileanzahl wesentlich vereinfacht.

Nach einer Ausgestaltung der Erfindung weist der Presskörper eine Pressfläche auf, die zumindest an einem Teil ihres Außenumfangs von einem oder mehreren Stützelementen nach unten hin überragt wird. Das oder die Stützelemente bilden eine Art Schürze, die bei einer Schließbewegung des ersten und zweiten Hebelarms aufeinander zu den sich während der Schließbewegung zunehmend verkleinernden umfangseitigen Spalt zwischen dem Raum oberhalb des Auflagebocks und dem Presskörper zumindest teilweise verkleinern oder vollständig abdecken. Durch das oder die Stützelemente wird insbesondere ein in die Presskammer eingelegtes Fruchtstück daran gehindert, seitlich aus der Presskammer herauszuquellen. Mit der Abwärtsbewegung des Presskörpers wird auch das Fruchtstück von den Stützelementen nach unten geleitet, wodurch das Fruchtstück auf dem Auflagebock gehalten bleibt. Auch Fruchtsaft, der beim Pressen aus zerplatzenden Zellen spritzt, kann nicht mehr ungehindert aus der Presskammer nach oben hin seitlich herausspritzen, sondern wird von den Stützelementen abgefangen und läuft nach unten hin in den Bereich der Sieböffnungen ab.

Nach einer Ausgestaltung der Erfindung weisen die Griffstücke der Hebelarme an zueinander benachbarten Kantenbereichen eine Fase auf. Durch die Fasen wird verhindern, dass sich die Haut zwischen den Kanten einklemmen kann, wenn die beiden Hebelarme aufeinander gedrückt werden.

Nach einer Ausgestaltung der Erfindung ist an dem Auffangbecher eine Ausgießerlippe ausgebildet. Durch die Ausgießerlippe kann der im Auffangbecher angesammelte Fruchtsaft ohne Kleckerverluste sauber ausgegossen werden.

Nach einer Ausgestaltung der Erfindung ist der Auffangbecher über eine Ausgießerlippe auch in angebautem Zustand entleerbar. Bei dieser Ausgestaltung muss der Auffangbecher nicht von der Fruchtpresse abgebaut werden, um den ausgepressten Fruchtsaft aus dem Auffangbecher ausschütten zu können. Es genügt vielmehr, die Fruchtpresse um einige Winkelgrade um ihre waagerechte Längsachse zu drehen, um in der dadurch erreichten Schrägstellung den Fruchtsaft über die Ausgießerlippe aus dem Auffangbecher ablaufen zu lassen. Die festeren Fruchtbestandteile werden dabei vom Sieb zurückgehalten und können die Presskammer nicht verlassen. Dadurch ist die Handhabung der Fruchtpresse nochmals deutlich vereinfacht.

Nach einer Ausgestaltung der Erfindung ist an dem Auffangbecher eine seitlich über den oberen Rand des Auffangbechers hervorstehende Abziehlasche ausgebildet. Durch die Abziehlasche kann der Auffangbecher leichter von der Fruchtpresse abgezogen werden. Die Abziehlasche konzentriert auch die beim Abziehen aufgewandte Zugkraft auf einen Kraftangriffspunkt, auf den die Rast-, Sperr- oder Riegelelemente genau ausgelegt sein können.
Nach einer Ausgestaltung der Erfindung ist auf der Unterseite des Auffangbechers eine Aufstellfläche ausgebildet, auf der die Fruchtpresse bei Nichtgebrauch abstellbar ist. Dabei ist die Aufstellfläche so bemessen und platziert, dass die Fruchtpresse fest darauf steht. Dazu muss die Position und Größe der Aufstellfläche an den Schwerpunkt der Fruchtpresse angepasst werden, beziehungsweise sind die Bauteile der Fruchtpresse so zueinander austariert, dass der Schwerpunkt passend zur Position und Größe der Aufstellfläche gelegen ist.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Fig. 1:: eine Ansicht von schräg oben auf eine Fruchtpresse,
- Fig. 2:: eine Ansicht von schräg unten auf eine Fruchtpresse mit einem abgenommenen Auffangbecher,
- Fig. 3:: eine Schnittansicht einer geschlossenen Fruchtpresse, und
- Fig. 4:: eine Schnittansicht auf eine geöffnete Fruchtpresse mit einer eingelegten Zitrone.

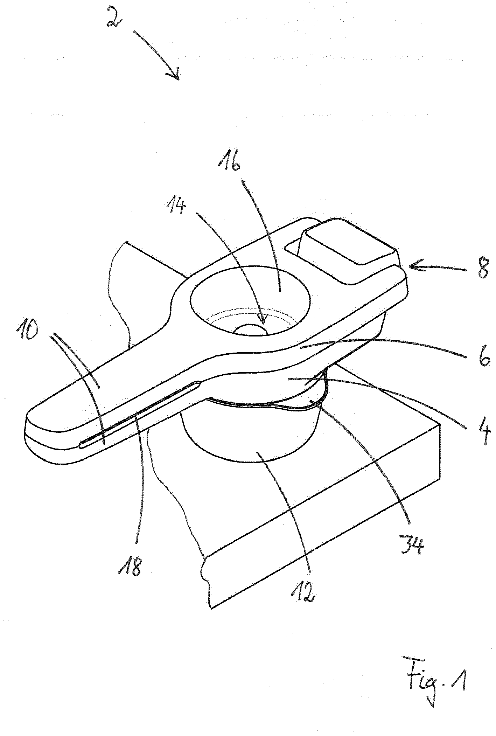

In Fig. 1 ist eine Fruchtpresse 2 in einer Ansicht von schräg oben gezeigt. Die Fruchtpresse 2 verfügt über einen ersten Hebelarm 4 sowie über einen zweiten Hebelarm 6. Beide Hebelarme 4, 6 sind an einem jeweiligen Ende über ein Gelenk 8 miteinander verbunden. An den dem Gelenk 8 abgewandten Enden weisen die beiden Hebelarme 4, 6 jeweils ein Griffstück 10 auf, an denen die Fruchtpresse 2 gehalten werden kann. In Fig. 1 ist die Fruchtpresse 2 in einer geschlossenen Stellung gezeigt. Wenn die Fruchtpresse 2 zum Einlegen eines Fruchtstücks geöffnet werden soll, wird nur der zweite Hebelarm 6 oder nur der erste Hebelarm 4 oder beide Hebelarme 4, 6 gleichzeitig um das Gelenk 8 herum aufgeschwenkt.

Am ersten Hebelarm 4 befindet sich an der Unterseite ein Auffangbecher 12. Der Auffangbecher 12 ist vom ersten Hebelarm 4 ablösbar. Die Ablösung kann beispielsweise erfolgen, indem an der Abziehlasche 34 gezogen wird.

Im zweiten Hebelarm 6 ist eine becherartige Vertiefung 16 erkennbar, deren Boden den Presskörper 14 ausbildet. Bei einer Schwenkbewegung des zweiten Hebelarms 6 um das Gelenk 8 herum auf den ersten Hebelarm 4 zu wird auch der Presskörper 14 nach unten bewegt. Ein unter dem Presskörper 14 befindliches Fruchtstück wird dabei so zusammengepresst, dass Fruchtsaft aus dem eingelegten Fruchtstück austritt. Natürlich kann auch der erste Hebelarm 4 auf den zweiten Hebelarm 6 zu bewegt werden, oder beide Hebelarme werden gleichzeitig aufeinander zu bewegt, dabei tritt derselbe Effekt ein.

In der in Fig. 1 gezeigten Ansicht ist außerdem erkennbar, dass die Griffstücke 10 der Hebelarme 4, 6 an zueinander benachbarten Kantenbereichen jeweils eine Fase 18 aufweisen.

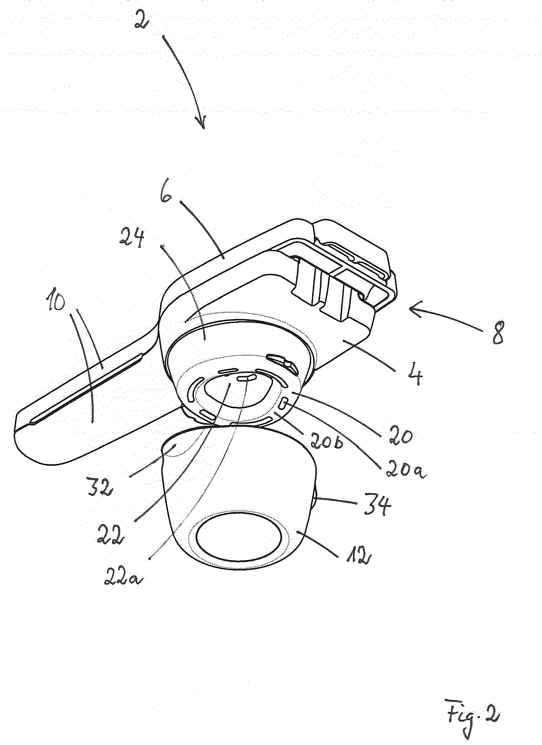

In Fig. 2 ist die Fruchtpresse 2 aus einer Ansicht von schräg unten gezeigt, wobei dort der Auffangbecher 12 von der Fruchtpresse abgezogen ist. Aus der Ansicht von schräg unten ist das Sieb 20 erkennbar, das eine Anzahl von Sieböffnungen 20a aufweist. Zwischen den Sieblöchern 20a befinden sich Materialstege 20b, die die gröberen Fruchtpartikel in der becherartigen Vertiefung 24 zurückhalten.

Im mittleren Bereich des Siebes 20 erhebt sich als eine Art Höcker der Auflagebock 22, auf den ein Fruchtstück aufgelegt werden kann. Im Ausführungsbeispiel verfügt auch der Auflagebock 22 über Sieblöcher 22a. In der in Fig. 2 dargestellten Ansicht ist erkennbar, dass die becherartige Vertiefung 24 nach unten hin über den ersten Hebelarm 4 hervorsteht.

Am Auffangbecher 12 ist die Ausgießerlippe 32 sowie die Abziehlasche 34 erkennbar.

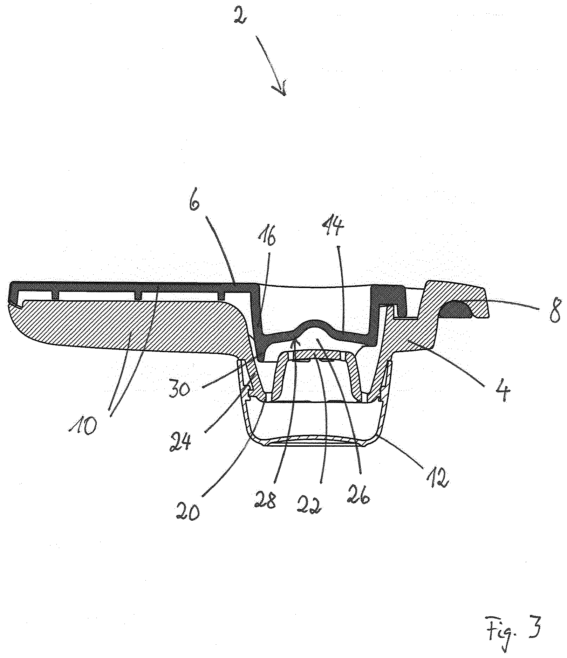

In Fig. 3 ist eine Schnittansicht einer geschlossenen Fruchtpresse gezeigt. In der Schnittansicht ist die Presskammer 26 gut erkennbar. Die Presskammer 26 wird nach oben hin durch den Presskörper 14 und nach unten hin im mittleren Bereich durch den Auflagebock 22 begrenzt. An den Seiten des Auflagebocks 22 erstreckt sich die Presskammer 26 bis hinunter zum Sieb 20. Die Presskammer 26 wird seitlich begrenzt von der Seitenwandung der becherartigen Vertiefung 24.

In der Schnittzeichnung in Fig. 3 ist erkennbar, dass zwischen der Pressfläche 28 des Presskörpers 14 und der Oberseite des Auflagebocks 22 auch in der vollständig geschlossenen Position der beiden Hebelarme 4, 6 noch ein Freiraum in der Presskammer 26 verbleibt, in dem sich nach dem Auspressen eines Fruchtstücks der verbleibende Trester ansammeln kann. Der Freiraum ermöglicht es, die beiden Griffstücke 10 in der Endstellung eines Pressvorgangs aufeinander zu legen, ohne dass dabei der zurückbleibende Trester zermatscht wird und in den Bereich der Sieböffnungen gelangt, die dadurch verstopfen könnten.

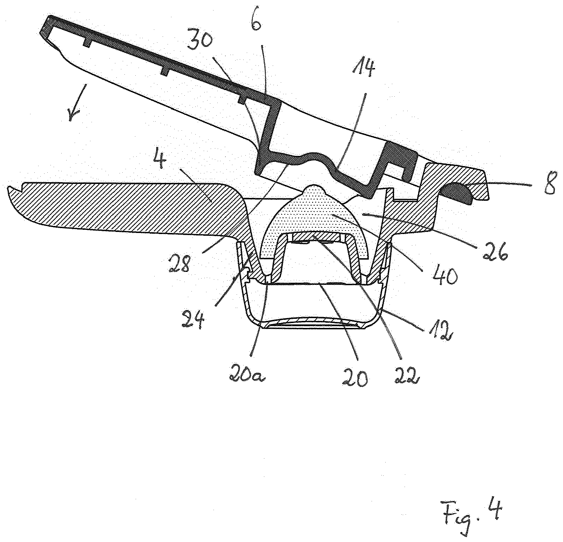

In der Schnittansicht in den Figuren 3 und 4 ist außerdem gut das Stützelement 30 erkennbar, dass nach unten über die benachbarte Pressfläche 28 hervorsteht. Im Ausführungsbeispiel reicht das Stützelement 30 auch über einen größeren Winkelgrad um die Pressfläche 28 des Presskörpers 14 herum.

In der Schnittansicht in Fig. 3 ist weiter erkennbar, dass der Auffangbecher 12 über entsprechende Rastnasen am ersten Hebelarm 4 gehalten ist. Wenn die griffstückseitige Außenwand des Auffangsbechers 12 über die an der Außenseite der Seitenwand ausgebildete Rastnase gehoben wird, kann der Auffangbecher 12 nach unten hin abgenommen werden.

Auf der Unterseite des Auffangbechers 12 ist eine Aufstellfläche ausgebildet, auf der die Fruchtpresse bei Nichtgebrauch abgestellt werden kann. Die Fruchtpresse 2 ist so ausbalanciert, dass die Fruchtpresse 2 auf der Aufstellfläche stehen kann, ohne umzufallen.

In der Schnittansicht in Fig. 3 ist außerdem erkennbar, dass der Auffangraum des Auffangbechers 12 ausreichend groß bemessen ist, um eine Fruchtsaftmenge aus der Presskammer 26 aufzunehmen. Die Seitenwände des Auffangbechers 12 sind so hoch gezogen, dass sie in der montierten Stellung des Auffangsbechers 12 deutlich über die Sieböffnungen 20 nach oben hin hinausragen. Ein Überlaufen des Auffangbechers 12 während eines Pressvorgangs sowie das Überschwappen des im Auffangbecher 12 angesammelten Fruchtsaftes nach dem Pressen und beim Abnehmen des Auffangbechers 12 von der Fruchtpresse 2 wird dadurch vermieden. In Fig. 4 ist die in Fig. 3 in der Schnittzeichnung dargestellte Fruchtpresse 2 in einer geöffneten Stellung gezeigt, wobei in die Presskammer 26 eine Zitrone 40 eingelegt ist. Es ist nachvollziehbar, dass bei einer Schließbewegung des zweiten Hebelarms 6 in die mit dem Pfeil angedeutete Richtung die Zitrone 40 von der Pressfläche 28 des Presskörpers 14 auf den Auflagebock 22 gepresst wird. Dabei kann aus dem Fruchtfleisch der Zitrone 40 der darin enthaltene Saft am Auflagebock 22 entlang nach unten in die Sieböffnungen 20a ablaufen und von dort in den Auffangbecher 12 tropfen. In der halboffenen Stellung des zweiten Hebelarms 6 ist auch erkennbar, dass das Stützelement 30 beim anschließenden Pressvorgang einen guten Spritzschutz bewirkt.

## Patentansprüche

1. Handbetätigte Fruchtpresse (2) mit einem ersten und einem zweiten Hebelarm (4, 6), die über ein Gelenk (8) miteinander verbunden sind, wobei das Gelenk (8) an einem Ende der Hebelarme (4, 6) angeordnet ist, die Hebelarme (4, 6) weisen an ihren dem Gelenk (8) abgewandten Enden jeweils ein Griffstück (10) auf, mit dem ersten Hebelarm (4) ist ein zwischen dem Griffstück (10) und dem Gelenk (8) angeordnetes Sieb (20) mit einem zugehörigen Auflagebock (22) und ein darunter angeordneter Auffangbecher (12) verbunden, und der zweite Hebelarm (6) ist mit einem Presskörper (14) verbunden, der bei einer Zusammenführungsbewegung der beiden Hebelarme (4, 6) einen Druck auf ein in eine zwischen dem Sieb (20) mit dem zugehörigen Auflagebock (22) und dem Presskörper (14) ausgebildete Presskammer (24) eingelegtes Fruchtstück ausübt, wobei das Sieb (20) einschließlich des zugehörigen Auflagebocks (22) direkt mit dem ersten Hebelarm (4) verbunden, der Auffangbecher (12) unterhalb des Siebes (20) angeordnet und lösbar mit dem ersten Sieb (20) einschließlich des zugehörigen Auflagebocks (22) und/oder dem ersten Hebelarm (4) verbunden ist, **dadurch gekennzeichnet, dass** das Sieb (20) einschließlich des zugehörigen Auflagebocks (22) in einer becherartigen Vertiefung (24) im ersten Hebelarm (4) ausgebildet ist, der Presskörper (14) einen integrierten Bestandteil des einstückigen Formköpers des zweiten Hebelarms (6) bildet, und der Presskörper (14) als eine becherartige Vertiefung (16) im zweiten Hebelarm (6) ausgebildet ist, die über die Unterseite des zweiten Hebelarms (6) nach unten hin hervorsteht und sich bei einer Schließbewegung der ersten und zweiten Hebelarme (4, 6) aufeinander zu auf den Auflagebock (22) zu absenkt.

2. Fruchtpresse (2) nach Anspruch 1, **dadurch gekennzeichnet, dass** das Sieb (20) einschließlich des zugehörigen Auflagebocks (22) einen integrierten Bestandteil des einstückigen Formköpers des ersten Hebelarms (4) bildet.

3. Fruchtpresse (2) nach einem der vorhergehenden Ansprüche, **dadurch gekennzeichnet, dass** der Presskörper (14) zumindest an einem Teil seines Außenumfangs einen oder mehrere nach unten über die Pressfläche (28) hervorstehende Stützelemente (30) aufweist.

4. Fruchtpresse (2) nach einem der vorhergehenden Ansprüche, **dadurch gekennzeichnet, dass** die Griffstücke (10) der Hebelarme (4, 6) an zueinander benachbarten Kantenbereichen eine Fase (18) aufweisen.

5. Fruchtpresse (2) nach einem der vorhergehenden Ansprüche, **dadurch gekennzeichnet, dass** an dem Auffangbecher (12) eine Ausgießerlippe (32) ausgebildet ist.

6. Fruchtpresse (2) nach Anspruch 5, **dadurch gekennzeichnet, dass** der Auffangbecher (12) über eine Ausgießerlippe (32) auch in angebautem Zustand entleerbar ist.

7. Fruchtpresse (2) nach einem der vorhergehenden Ansprüche, **dadurch gekennzeichnet, dass** an dem Auffangbecher (12) eine seitlich über den oberen Rand des Auffangbechers (12) hervorstehende Abziehlasche (34) ausgebildet ist.

8. Fruchtpresse (2) nach einem der vorhergehenden Ansprüche, **dadurch gekennzeichnet, dass** auf der Unterseite des Auffangbechers (12) eine Aufstellfläche ausgebildet ist, auf der die Fruchtpresse bei Nichtgebrauch abstellbar ist.

## Claims

1. Manually operated fruit press (2) comprising a first and a second lever arm (4, 6) which are interconnected by means of a joint (8), the joint (8) being arranged at one end of the lever arms (4, 6), each of the lever arms (4, 6) comprising, at the ends thereof remote from the joint (8), a handle portion (10), a strainer (20), which is arranged between the handle portion (10) and the joint (8) and comprises an associated support block (22) and a collection cup (12) arranged thereunder, being connected to the first lever arm (4), and the second lever arm (6) being connected to a pressing element (14) which exerts pressure onto a piece of fruit placed in a pressing chamber (24) formed between the strainer (20) comprising the associated support block (22) and the pressing element (14) when the two lever arms (4, 6) are moved so as to be brought together, the strainer (20), together with the associated support block (22), being directly connected to the first lever arm (4), the collection cup (12) being arranged underneath the strainer (20) and being detachably connected to the first strainer (20), together with the associated support block (22), and/or to the first lever arm (4), **characterised in that** the strainer (20), together with the associated support block (22), is formed in a cup-like recess (24) in the first lever arm (4), the pressing element (14) forms an integrated component of the one-piece moulded body of the second lever arm (6), and the pressing element (14) is in the form of a cup-like recess (16) in the second lever arm (6) which projects downwards beyond the underside of the second lever arm (6) and, during a closing movement of the first and second lever arms (4, 6) towards one another, lowers towards the support block (22).

2. Fruit press (2) according to claim 1, **characterised in that** the strainer (20), together with the associated support block (22), forms an integrated component of the one-piece moulded body of the first lever arm (4).

3. Fruit press (2) according to either of the preceding claims, **characterised in that** the pressing element (14) comprises, at least on part of its outer circumference, one or more support elements (30) which project downwards beyond the pressing surface (28).

4. Fruit press (2) according to any of the preceding claims, **characterised in that** the handle portions (10) of the lever arms (4, 6) comprise a chamfered region (18) at mutually adjacent edge regions.

5. Fruit press (2) according to any of the preceding claims, **characterised in that** a pouring lip (32) is formed on the collection cup (12).

6. Fruit press (2) according to claim 5, **characterised in that** the collection cup (12) can be emptied via a pouring lip (32) even in the attached state.

7. Fruit press (2) according to any of the preceding claims, **characterised in that** a pull tab (34) which projects laterally beyond the top edge of the collection cup (12) is formed on the collection cup (12).

8. Fruit press (2) according to any of the preceding claims, **characterised in that** a stand surface is formed on the underside of the collection cup (12), on which surface the fruit press can be stored when not in use.

## Revendications

1. Presse-fruits manuel (2), comprenant un premier et un deuxième bras de levier (4, 6) reliés ensemble par un joint articulé (8), dans lequel le joint articulé (8) est disposé à une extrémité des bras de levier (4, 6), les bras de levier (4, 6) présentent respectivement une poignée (10) à leurs extrémités détournées du joint articulé (8), une passoire (20) avec un support d'appui (22) associé, disposée entre la poignée (10) et le joint articulé (8), et un gobelet collecteur (12) disposé dessous sont reliés au premier bras de levier (4), et le deuxième bras de levier (6) est relié à un corps de pressage (14) qui, en cas de rapprochement des deux bras de levier (4, 6), exerce une pression sur un morceau de fruit placé dans une chambre de pressage (24) réalisée entre la passoire (20) avec le support d'appui associé (22) et le corps de pressage, dans lequel la passoire (20) avec le support d'appui (22) associé est reliée directement au premier bras de levier (4), le gobelet collecteur (12) est disposé sous la passoire (20) et relié de manière amovible à la première passoire (20) avec le support d'appui associé (22) et/ou au premier bras de levier (4), **caractérisé en ce que** la passoire (20) avec le support d'appui associé (22) est réalisée dans un évidement de type godet (24) dans le premier bras de levier (4), le corps de pressage (14) fait partie intégrante du corps moulé solidaire du deuxième bras de levier (6), et le corps de pressage (14) est réalisé comme un évidement (16) de type godet dans le deuxième bras de levier (6), ledit évidement faisant saillie vers le bas au-delà de la face inférieure du deuxième bras de levier (6) et s'abaissant sur le support d'appui (22) lors d'un mouvement de fermeture des premier et deuxième bras de levier (4, 6) l'un vers l'autre.

2. Presse-fruits (2) selon la revendication 1, **caractérisé en ce que** la passoire (20) avec le support d'appui associé (22) fait partie intégrante du corps moulé solidaire du premier bras de levier (4).

3. Presse-fruits (2) selon l'une quelconque des revendications précédentes, **caractérisé en ce que** le corps de pressage (14) présente au moins sur une partie de sa circonférence extérieure un ou plusieurs éléments d'appui (30) faisant saillie vers le bas au-delà de la surface de pressage (28) .

4. Presse-fruits (2) selon l'une quelconque des revendications précédentes, **caractérisé en ce que** les poignées (10) des bras de levier (4, 6) présentent un chanfrein (18) dans des zones de bord adjacentes.

5. Presse-fruits (2) selon l'une quelconque des revendications précédentes, **caractérisé en ce qu'**un bec verseur (32) est réalisé sur le gobelet collecteur.

6. Presse-fruits (2) selon la revendication 5, **caractérisé en ce que** le gobelet collecteur (12) peut être vidé par l'intermédiaire d'un bec verseur (32), même à l'état installé.

7. Presse-fruits (2) selon l'une quelconque des revendications précédentes, **caractérisé en ce qu'**une languette d'extraction (34) dépassant latéralement du bord supérieur du gobelet collecteur (12) est réalisée sur le gobelet collecteur (12) .

8. Presse-fruits (2) selon l'une quelconque des revendications précédentes, **caractérisé en ce qu'**une surface de pose est réalisée sur la face inférieure du gobelet collecteur (12) sur laquelle on peut poser le presse-fruits en cas de non-utilisation.
